# EUROPEAN PATENT SPECIFICATION

(11) **EP 2 215 749 B1**
(45) Date of publication and mention of the grant of the patent: **13.04.2011**
(21) Application number: 08844671.1
(22) Date of filing: 01.10.2008
(51) Int. Cl.: H04B 7/26

(54) **METHODS AND ARRANGEMENTS IN A WIRELESS COMMUNICATION SYSTEM**
VERFAHREN UND ANORDNUNGEN IN EINEM DRAHTLOSEN KOMMUNIKATIONSSYSTEM
PROCÉDÉS ET AGENCEMENTS DANS UN SYSTÈME DE COMMUNICATION SANS FIL

(30) Priority: 30.10.2007 US 983650 P
(43) Date of publication of application: 11.08.2010
(73) Proprietor: Telefonaktiebolaget LM Ericsson (publ), 164 83 Stockholm (SE)
(72) Inventor: BERGMAN, Johan, S-112 27 Stockholm (SE); GERSTENBERGER, Dirk, S-113 56 Stockholm (SE)
(74) Representative: Kühn, Friedrich Heinrich
(86) International application number: PCT/SE2008/051111
(87) International publication number: WO 2009/058073

(56) References cited:
- EP-A- 1 235 367
- US-A1- 2002 093 940
- US-A1- 2004 213 199
- "3GPP TR 25.854 - 3RD GENERATION PARTNERSHIP PROJECT; TECHNICAL SPECIFICATION GROUP RADIO ACCESS NETWORK; STUDY REPORT FOR UPLINK SYNCHRONOUS TRANSMISSION SCHEME (USTS); RELEASE 5" 1 December 2001 (2001-12-01), 3RD GENERATION PARTNERSHIP PROJECT (3GPP); TECHNICAL REPORT (TR), XX, XX , XP002986315 paragraphs [0004] - [4.1.3.3], [4.3.2.3]

## Description

### TECHNICAL FIELD

The present invention relates to the area of wireless communications, and especially to uplink timing adjustment in a UMTS Terrestrial Radio Access Network (UTRAN).

### BACKGROUND

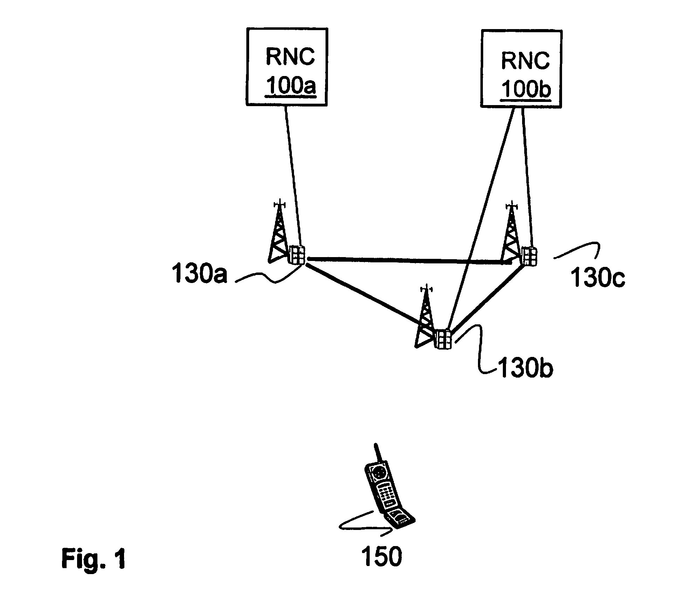

The Universal Mobile Telecommunication System (UMTS) is one of the third generation mobile communication technologies designed to succeed GSM. UMTS Terrestrial Radio Access Network (UTRAN) is the radio access network of a UMTS system. The WCDMA technology has been selected as the standard for UTRAN. In the WCDMA architecture, a user equipment (UE) 150 is wirelessly connected to NodeB (NB) 130a-c, which in turn are connected to radio network controllers (RNC) 100 a-b, as illustrated in **figure 1****.**

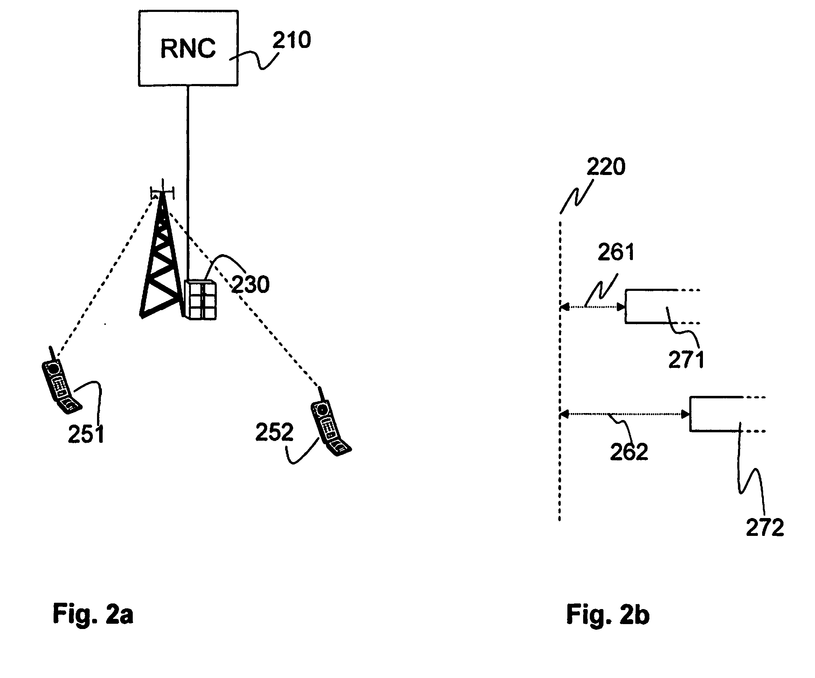

Illustrated in **figure 2a**, an RNC 210 is connected to an NB 230, which in turn is serving two UEs 251, 252. In a WCDMA radio network like this one, the signals on the downlink (DL) dedicated channels of the different UEs in a cell are 256 chip time aligned, in order to obtain orthogonality. This will be explained below taking the network in **figure 2a** as an example and with reference to **figure 2b**. The two UEs 251, 252 in this cell served by the same NB 230, has each of them a dedicated timing τ*_{dpch}* 261, 262 relative to the NB time reference 220. The dedicated timing per UE 261, 262 is given in units of 256 chip (τ*_{dpch}* = *k* * 256 , where *k* is an integer), and secures that the signals on the UEs dedicated channels 271, 272 are time aligned on the DL. If the first UE 251 has a dedicated timing 261 of τ*_{dpch}* = 1* 256, and the second UE 252 has a dedicated timing 262 of τ*_{dpch}* = 2*256, then their signals will be aligned with a separation of 256 chip. It is the RNC that controls the τ*_{dpch}* values and that informs the NB and the UE about what value to use. The RNC 210 thus informs the NB 230 and both the first UE 251 and the second UE 252 about the dedicated timing for each of the UEs.

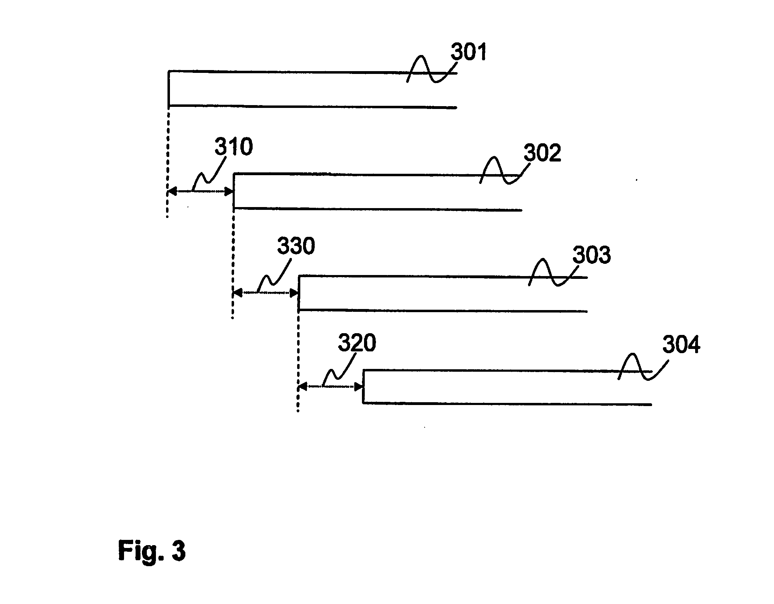

When the DL signal 302 arrives at the UE, it is delayed compared to the signal sent from the NB 301 due to the DL propagation delay 310, which is illustrated in **figure 3**. The propagation delay varies for the different UEs in a cell, depending on their distance from the NB. The corresponding signal on the uplink (UL) 303 is sent to the NB with a certain constant delay 330 - To (in principle the same delay for all UEs, except for UEs in soft handover) relative to the received DL signal 302, and this uplink signal 303 is of course also subject to an UL propagation delay 320 before it is being received at the NB 304. Thus, as the round trip time (i.e. the sum of the UL and DL propagation delay) varies between the different UEs in a cell, the different UE signals on the UL dedicated channels in a cell are typically not time aligned. Also multipath and soft handover affects the time alignment on the UL. At soft handover (i.e. when a UE is simultaneously connected to two or more cells during a call), the UL timing at the UE may vary +/-128 chip from the value of ∼ *T₀.*

The UL time alignment for a UE thus mainly follows the DL time alignment and is affected by the RNCs choice of τ*_{dpch}*, but it cannot be completely controlled mainly due to the varying round trip time for the different UEs in a cell, and a misalignment may thus occur on the uplink. For low rates, the lack of UL time alignment has not been seen as a big problem, but when the peak rates are becoming higher and higher the UL interference is becoming more and more important.

In the 3GPP (3^{rd} Generation Partnership Project), a solution has been discussed, which is providing a possibility to time adjust the signals on the UL dedicated channels to some extent. In this solution, a small fraction (typically every 15:th one) of the Transmit Power Control (TPC) symbols on the Dedicated Physical Channel (DPCH) is used to transmit timing adjustment commands periodically from the NB to the UE. This solution will in the following be referred to as the TPC solution.

The purpose of the TPC solution is to achieve better orthogonality by aligning the symbols from different UEs and thus to adjust the timing at a sub chip level, typically +/-¼ of a chip. One problem with the TPC solution is that larger time adjustments, like time adjustments of up to 256 chip needed to avoid that different UEs have overlapping transmission time intervals (TTIs), would take very long time to perform.

Furthermore, the TPC solutions periodic timing adjustment commands may be an unnecessarily wasteful approach. How often to send the commands need to be dimensioned for the worst case, meaning that in many scenarios the number of commands will be unnecessarily high and hence the signaling overhead unnecessarily large. There will be signaling resources dedicated for timing adjustments even though it might not be needed from an interference perspective. Another implementation dependent drawback Is that if the timing adjustment command is implemented as a binary command, i.e. a.+/-1 time step, there will be periodic timing adjustments In one direction (+1 time step) or the other (-1 time step) no master whether they are needed or not

Finally, a further drawback with the TPC solution is that it doesn't work with legacy UEs (e.g. UEs specified according to 3GPP Release 99), as these cannot be made to interpret the TPC symbols as timing adjustment commands.

Other related art within this technical field is described e.g. in US2002/0093940, which discloses method and arrangements for replacing the TPC command with a timing alignment bit (TAB) to indicate how to adjust the UE transmission, wherein the TAB is signalled to the UE a number of times to enhance the reliability of the timing adjustment. US2004/0213199 furthermore discloses a method for Downlink transmission timing control at a RNC, and EP-A-1 235 367 discloses a method for controlling uplink transmission timing based on a combination of TAB information. Furthermore "3GPP TR 25.854, 3rd Generation Partnership Project, Technical Specification Group Radio Access network; Study report for uplink synchronous transmission scheme (USTS); Release5" discloses the techniques behind the concept of uplink synchronous transmission scheme and how it should be integrated into the overall architecture of UTRA.

### SUMMARY

The object of the present invention is to provide methods and arrangements that obviate some of the above disadvantages and that let the NB determine which UEs in a cell that need to be time adjusted on the uplink, and then enables the NB to initiate a time adjustment of these UEs.

This is achieved by a solution where the information about the estimated reception time Is used by the NB to determine whether the UEs need to be time adjusted on the UL, in order to avoid TTI overlapping and thus interference. The estimated reception time of a UE UL signal is compared with an ideal reception time (the reference time) defined based on the knowledge of the estimated reception times of all UEs. If the difference between the estimated and the ideal reception time is larger than a pre-defined threshold value, meaning that the overlapping with some other UEs TTI will be big, a timing adjustment is initiated.

Thus in accordance with a first aspect of the present invention, a method is provided for uplink timing adjustment for a NB where the NB receives signals from user equipment. The method comprises the steps of calculating a difference between an estimated reception time of a user equipment signal and a time reference, and determining whether the difference exceeds a pre-defined threshold value. The method also comprises the step of initiating the uplink timing adjustment when the difference exceeds the pre-defined threshold value.

In accordance with a third aspect of the present invention, a method is provided for uplink timing adjustment for a UE where the user equipment sends signals to a NB with a certain uplink timing. The method comprises the steps of receiving an uplink timing adjustment command on a channel, which is based on a calculated difference between an estimated reception time of a user equipment signal and a time reference. It also comprises the step cf adjusting the uplink timing according to the command.

In accordance with a fourth aspect of the present invention, a NB adapted to receive signals from user equipment is provided. The NB comprises means for calculating a difference between an estimated reception time of a user equipment signal and a time reference, and means for determining whether the difference exceeds a pre-defined threshold value. It also comprises means for initiating the uplink timing adjustment.

In accordance with a sixth aspect of the present invention, a UE, where the user equipment is adapted to send signals to a NB with a certain timing, is provided. The UE comprises means for receiving an uplink timing adjustment command on a channel, which is based on a calculated difference between an estimated reception time of a user equipment signal and a time reference. It also comprises means for adjusting the uplink timing according to the command.

An advantage of embodiments of the present invention is that they make it possible to limit the time adjustment only to the UEs that really need it, avoiding a periodic adjustment and thus minimizing the signalling overhead.

### BRIEF DESCRIPTION OF THE DRAWINGS

**Figure 1** illustrates schematically a part of, e.g., a WCDMA system wherein the present invention may be implemented.
**Figure 2a** illustrates schematically a part of, e.g., a WCDMA system wherein the present invention may be implemented.
**Figure 2b** illustrates schematically the timing alignment of two UE signals on the DL.
**Figure 3** illustrates schematically the delays of a signal on the DL and UL.
**Figure 4** illustrates schematically the RNC, NB and UE according to embodiments of the present invention.
**Figures 5a****,** **5b and 5c** are flowcharts of the methods of the NB, RNC and UE respectively according to embodiments of the present invention.

### DETAILED DESCRIPTION

In the following, the invention will be described in more detail with reference to certain embodiments and to accompanying drawings. For purposes of explanation and not limitation, specific details are set forth, such as particular scenarios, techniques, etc., in order to provide a thorough understanding of the present invention. However, it will be apparent to one skilled in the art that the present invention may be practiced in other embodiments that depart from these specific details.

Moreover, those skilled in the art will appreciate that the functions and means explained herein below may be implemented using software functioning in conjunction with a programmed microprocessor or general purpose computer, and/or using an application specific integrated circuit (ASIC). It will also be appreciated that while the current invention is primarily described in the form of methods and devices, the invention may also be embodied in a computer program product as well as in a system comprising a computer processor and a memory coupled to the processor, wherein the memory is encoded with one or more programs that may perform the functions disclosed herein.

The present invention uses the fact that the NB can gather information about the estimated reception time of the UL signals of all the UEs. Based on this information, the NB can determine whether signals from the different UEs in a cell will be aligned in time, and will thus be able to tell what UEs that need to be time adjusted on the UL. The advantage of doing this is that it makes it possible to limit the time adjustment only to the UEs that really need it, avoiding a periodic adjustment and thus minimizing the signaling overhead.

The purpose of time adjusting the signals is to align the UEs relative to each other so that the NB scheduler can schedule data transmissions from different UEs with as little TTI overlap as possible, which will reduce the interference. This is important especially when the peak rates becomes higher, as higher rates makes the system more sensitive to interference.

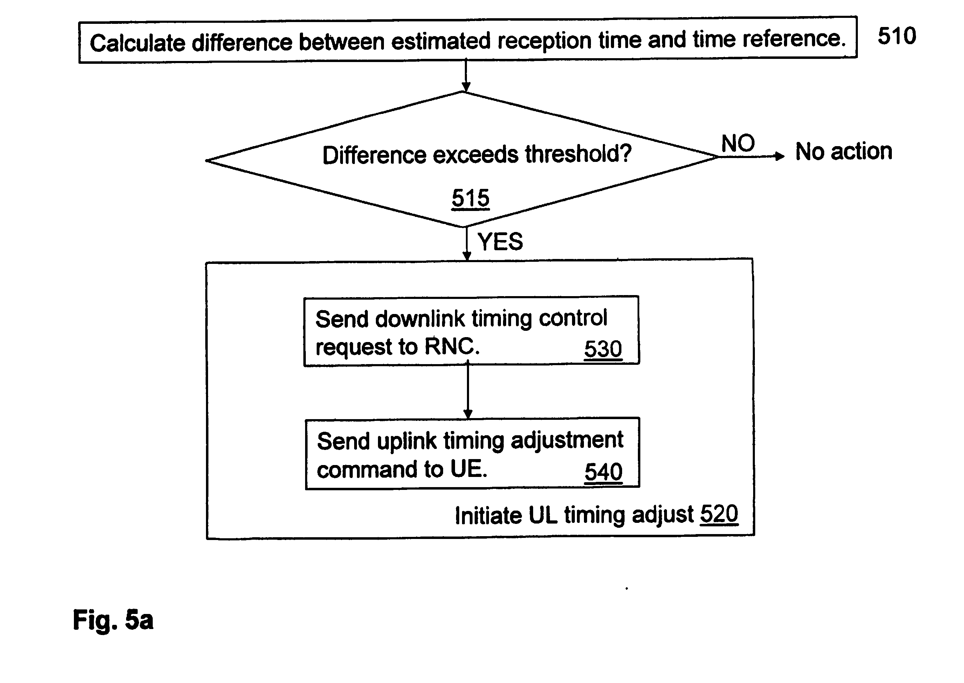

Thus according to one embodiment described with reference to **figure 5a**, the NB calculates 510 a difference between an estimated reception time of a user equipment signal and a time reference, and determines 515 whether the difference exceeds a pre-defined threshold value. The NB also initiates 520 the uplink timing adjustment when the difference exceeds the pre-defined threshold value.

The determination of whether an UL timing adjustment is needed for a certain UE is done by comparing the estimated reception time of this UE signal with a time reference. The time reference corresponds to the desired reception time of the UE signal, i.e. the ideal reception time to avoid interference. If the difference between these points in time is larger than a pre-defined threshold value, then the UE signal needs to be time adjusted in order to avoid too much TTI overlap. The purpose of defining a threshold is to allow for some transmission overlap.

The determination of whether an UL timing adjustment is needed or not, can be done for all UEs served by the NB, and even for UEs that the NB is not serving. But it could also be done for only a part of the UEs. As the NB can get the information about the different UEs contribution to the UL interference, the NB can choose to involve only the most dominating interferers in the determination of what UEs to time align for example.

When it is determined that a UE needs to be time adjusted on the UL the NB initiates the actual UL timing adjustment by sending a request to the RNC or a command to the UE or both.

In prior art, the RNCs have the possibility to do an indirect time adjustment of the UL signals by adjusting the time alignment on the DL. This is possible as they control the τ*_{dpch}* for each UE, but the problem is that the RNC does not know when the time adjustment is needed for an individual UE. In the present invention, this possibility is used by letting the NB - that already knows if a time adjust is needed - request a DL time adjustment from the RNC (which indirectly gives an UL time adjustment as well).

In a first embodiment of the present invention, the NB requests a DL timing adjustment from the RNC via the lub (or lub/lur) protocol, with the information about what UE to time adjust and how much adjustment that is needed (based on the difference between the estimated reception time and the reference time). The RNC will use the existing Radio Resource Control (RRC) signaling and the NodeB Application Part (NBAP) signaling to adjust the DL timing, which in turn will affect the UL timing as already described above. In this first embodiment the adjustment is coarse with a resolution of 256 chip. Advantages of this embodiment is that it is applicable both in soft handover and in non soft handover cases and that it can be used for legacy UEs as the mentioned RRC signaling exists in the standard since 3GPP Release 99.

In a second embodiment of the present invention, the initiation of the UL timing adjustment is done by sending an UL timing adjustment command via a High Speed Downlink Packet Access Shared Control Channel (HS-SCCH) order, directly to the UE. An existing order format can be used (according to 3GPP TS 25.212 in Release 7), but one or more new order types need to be defined for this embodiment. The new order type(s), comprised in the HS-SCCH order, will indicate that the content is an UL timing adjustment command and how much the timing should be adjusted. Upon reception of such an order, the UE can adjust its timing accordingly. In an alternative embodiment, special values on an Enhanced UL Absolute Grant Channel (E-AGCH) can be used instead of HS-SCCH orders. In both of these two alternatives, the advantage is that the adjustment resolution can be either small (a few chip) or big (hundreds of chip), and that the complete time adjustment is done at once either it is small or big. As these embodiments do not involve the RNC, they also provide a quicker adjustment than in the first embodiment described above. Another advantage is that it is possible to make an adjustment on chip level and not just on a 256 chip level.

In a third embodiment of the present invention, the initiation of the UL timing adjustment is a combination of the first and the second embodiment described above. As an example, the method of the first embodiment can then be used for a coarse adjustment in the order of a multiple of 256 chip adjustment, and the method of the second embodiment can be used for fine adjustments in the order of one or a few chip adjustments.

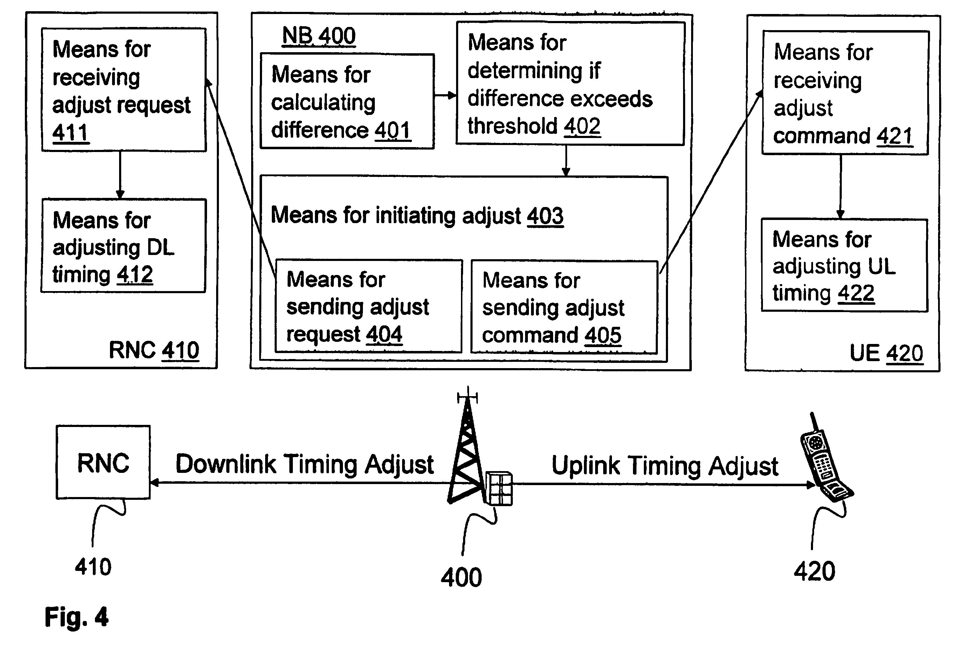

Schematically illustrated in **figure 4** and according to the third embodiment described above, the NB 400 comprises means for calculating 401 the difference between an estimated reception time and a time reference. It also comprises mean for determining 402 whether the calculated difference exceeds a pre-defined threshold or not, and means for initiating 403 the uplink timing adjustment. The means for initiating 403 the uplink timing adjustment comprises in turn means for sending 404 an UL timing adjust request to the RNC and means for sending 405 an UL timing adjustment command on a channel. The channel can be either the HS-SCCH or the E-AGCH, as described above.

Also illustrated in **figure 4** is the RNC 410. It comprises means for receiving 411 a DL timing adjustment request over lub or lub/lur from the NB, and means for adjusting 412 the timing on the DL accordingly.

Further illustrated in **figure 4** is the UE 420. It comprises means for receiving 421 an UL timing adjustment command from the NB, and means for adjusting 422 the timing on the UL accordingly.

**Figure 5a** is a flowchart of the method for the NB, according to the third embodiment of the present invention as described above. In step 510 the difference between an estimated reception time of a UE and a time reference is calculated. The time reference corresponds to a desired reception time in order to avoid interference. A comparison of the desired reception time and the estimated reception time will give an indication if the corresponding UE will need to be time aligned or not. In step 515 it is determined if the difference exceeds a pre-defined threshold value, and if it does, a timing adjustment is initiated in step 520. If the difference does not exceed the pre-defined threshold, there is no need for a timing adjustment for the UE, and no action is taken. There can thus be a certain difference between the estimated reception time and the time reference (although lower than the pre-defined threshold value) without initiating a timing adjustment, which means that a certain TTI overlapping is accepted. Step 520 comprises of two steps: step 530 and step 540. In step 530, a DL timing control request is sent to the RNC. The DL timing control request will include an indication of how much the DL should be adjusted, and this will thus indirectly affect the UL timing. In step 540, an UL timing adjustment command is sent on a channel to the UE. This will directly affect the UL timing adjustment. In step 530, the adjustment is coarse, and it is complemented with the adjustment of step 540, which allows for a finer adjustment.

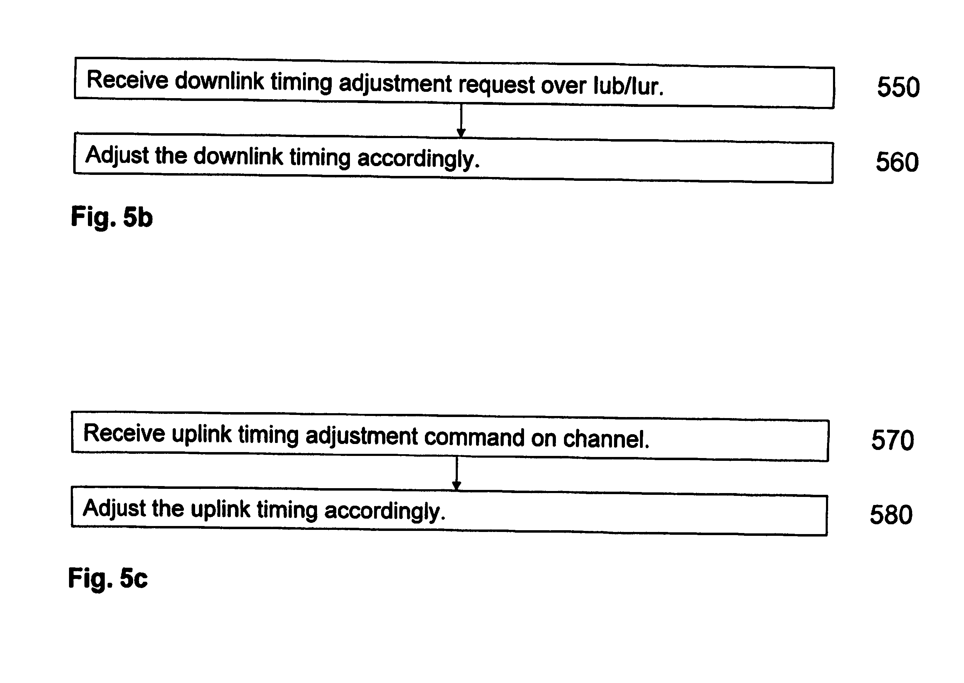

**Figure 5b** is a flowchart of the method for the RNC, according to the third embodiment of the present invention as described above. In step 550, the RNC receives a DL timing adjustment request over lub or lub/lur from the NB, and in step 560 the RNC adjusts the DL timing according to the request. This will then indirectly affect the UL timing.

Furthermore, **figure 5c** is a flowchart of the method for the UE, according to the third embodiment of the present invention as described above. In step 570, the UE receives an UL timing adjustment command from the NB on a HS-SCCH or on a E-AGCH, and in step 580 the UE adjusts the uplink timing according to the received command. The command includes information about the magnitude of the time adjustment needed in order to avoid TTI overlapping with other UEs.

The above mentioned and described embodiments are only given as examples and should not be limiting to the present invention. Other solutions, uses, objectives, and functions within the scope of the invention as claimed in the accompanying patent claims should be apparent for the person skilled in the art.

## Claims

1. A method of uplink timing adjustment of a user equipment in a WCDMA communications system, said system comprising a Radio Network Controller, RNC, connected to a NodeB, said NodeB receiving signals from the user equipment, said method **characterised by** the following steps performed by a NodeB;
- calculating (510) a difference between an estimated reception time of the user equipment signal and a time reference,
- determining (515) whether said difference exceeds a pre-defined threshold value,
- initiating (520) the uplink timing adjustment only when said difference exceeds the pre-defined threshold value.

2. The method according to claim 1, wherein the step of initiating (520) the uplink timing adjustment comprises the further step of
- sending (530) a downlink timing control request to the RNC, which is based on a calculated difference between an estimated reception time of a user equipment signal and a time reference, in order for the RNC to adjust the downlink timing.

3. The method according to any of claims 1-2, wherein the step of initiating (520) the uplink timing adjustment comprises the further step of
- sending (540) an uplink timing adjustment command on a High Speed Downlink Packet Access Shared Control Channel.

4. The method according to any of claims 1-2, wherein the step of initiating (520) the uplink timing adjustment comprises the further step of
- sending (540) an uplink timing adjustment command on an Enhanced Uplink Absolute Grant Channel.

5. A method of uplink timing adjustment of a user equipment in a WCDMA communications system, said system comprising a Radio Network Controller, RNC, connected to a NodeB, the user equipment sending signals to the NodeB with a certain uplink timing, said method **characterised by** the following steps performed by the user equipment,
- receiving (570) an uplink timing adjustment command on channel, only when a calculated difference between an estimated reception time of the user equipment signal and a time reference exceeds a pre-defined threshold value, and
- adjusting (580) the uplink timing according to the command.

6. The method according to claim 5, wherein the channel is a High Speed Downlink Packet Access Shared Control Channel.

7. The method according to claim 5, wherein the channel is an Enhanced Uplink Absolute Grant Channel.

8. A NodeB (400)of a WCDMA communications system, said NodeB connectable to a Radio Network Controller, RNC, and adapted to receive signals from user equipment, **characterised by**
- means for calculating (401) a difference between an estimated reception time of a user equipment signal and a time reference,
- means for determining (402) whether said difference exceeds a pre-defined threshold value, and
- means for initiating (403) an uplink timing adjustment only when said difference exceeds the pre-defined threshold value.

9. The NodeB according to claim 8, wherein the means for initiating (403) the uplink timing adjustment comprises
- means for sending (404) a downlink timing control request to the RNC, which is based on a calculated difference between an estimated reception time of a user equipment signal and a time reference, in order for the RNC to adjust the downlink timing.

10. The NodeB according to any of claims 8-9, wherein the means for initiating (403) the uplink timing adjustment comprises
- means for sending (405) an uplink timing adjustment command on a High Speed Downlink Packet Access Shared Control Channel.

11. The NodeB according to any of claims 8-9, wherein the means for initiating (403) the uplink timing adjustment comprises
- means for sending (405) an uplink timing adjustment command on an Enhanced Uplink Absolute Grant Channel.

12. A user equipment (420) of a WCDMA communication system, said system comprising a Radio Network Controller, RNC, connected to a NodeB, wherein the user equipment is adapted to send signals to the NodeB with a certain timing, **characterised by**
- means for receiving (421) an uplink timing adjustment command on a channel, only when a calculated difference between an estimated reception time of the user equipment signal and a time reference exceeds a pre-defined threshold value, and
- means for adjusting (422) the uplink timing according to the command.

13. The user equipment according to claim 12, wherein the channel is a High Speed Downlink Packet Access Shared Control Channel.

14. The user equipment according to claim 12, wherein the channel is an Enhanced Uplink Absolute Grant Channel.

## Patentansprüche

1. Verfahren für Uplink-Timing-Anpassung eines Benutzergeräts in einem WCDMA-Kommunikationssystem, wobei das System eine Funknetzsteuerung, RNC, umfasst, die an einen NodeB angeschlossen ist, wobei der NodeB Signale vom Benutzergerät empfängt, wobei das Verfahren durch folgende vom NodeB ausgeführte Schritte **gekennzeichnet** ist:
Berechnen (510) einer Differenz zwischen einer geschätzten Empfangszeit des Benutzergerätsignals und einer Zeitreferenz,
Bestimmen (515), ob die Differenz einen vordefinierten Schwellenwert übersteigt,
die Uplink-Timing-Anpassung nur dann initiieren (520), wenn die Differenz den vordefinierten Schwellenwert übersteigt.

2. Verfahren nach Anspruch 1, worin der Schritt des Initiieren (520) der Uplink-Timing-Anpassung folgenden weiteren Schritt umfasst:
Senden (530) einer Downlink-Timing-Steuerungsanforderung an die RNC, die auf einer berechneten Differenz zwischen einer geschätzten Empfangszeit eines Benutzergerätsignals und einer Zeitreferenz basiert, damit die RNC das Downlink-Timing anpasst.

3. Verfahren nach einem der Ansprüche 1-2, worin der Schritt des Initiieren (520) der Uplink-Timing-Anpassung folgenden weiteren Schritt umfasst:
Senden (540) eines Uplink-Timing-Anpassungsbefehls über einen HS-DPASCCH (High Speed Downlink Packet Access Shared Control Channel).

4. Verfahren nach einem der Ansprüche 1-2, worin der Schritt des Initiieren (520) der Uplink-Timing-Anpassung folgenden weiteren Schritt umfasst:
Senden (540) eines Uplink-Timing-Anpassungsbefehls über einen E-UAGCH (Enhanced Uplink Absolute Grant Channel).

5. Verfahren für Uplink-Timing-Anpassung eines Benutzergeräts in einem WCDMA-Kommunikationssystem, wobei das System eine Funknetzsteuerung, RNC, umfasst, die an einen NodeB angeschlossen ist, wobei das Benutzergerät Signale mit einem bestimmten Uplink-Timing an den NodeB sendet, wobei das Verfahren durch folgende vom Benutzergerät ausgeführte Schritte **gekennzeichnet** ist:
einen Uplink-Timing-Anpassungsbefehl über einen Kanal nur dann empfangen (570), wenn eine berechnete Differenz zwischen einer geschätzten Empfangszeit des Benutzergerätsignals und einer Zeitreferenz einen vordefinierten Schwellenwert übersteigt, und
Anpassen (580) des Uplink-Timings gemäß dem Befehl.

6. Verfahren nach Anspruch 5, worin der Kanal ein HS-DPASCCH (High Speed Downlink Packet Access Shared Control Channel) ist.

7. Verfahren nach Anspruch 5, worin der Kanal ein E-UAGCH (Enhanced Uplink Absolute Grant Channel) ist.

8. NodeB (400) eines WCDMA-Kommunikationssystems, wobei der NodeB an eine Funknetzsteuerung, RNC, anschließbar ist und dazu angepasst ist, Signale vom Benutzergerät zu empfangen, **gekennzeichnet durch**
Mittel (401) zum Berechnen einer Differenz zwischen einer geschätzten Empfangszeit eines Benutzergerätsignals und einer Zeitreferenz,
Mittel (402) zum Bestimmen, ob die Differenz einen vordefinierten Schwellenwert übersteigt, und
Mittel (403), um eine Uplink-Timing-Anpassung nur dann zu initiieren, wenn die Differenz den vordefinierten Schwellenwert übersteigt.

9. NodeB nach Anspruch 8, worin das Mittel zum Initiieren (403) der Uplink-Timing-Anpassung Folgendes umfasst:
Mittel zum Senden (404) einer Downlink-Timing-Steuerungsanforderung an die RNC, die auf einer berechneten Differenz zwischen einer geschätzten Empfangszeit eines Benutzergerätsignals und einer Zeitreferenz basiert, damit die RNC das Downlink-Timing anpasst.

10. NodeB nach einem der Ansprüche 8-9, worin das Mittel zum Initiieren (403) der Uplink-Timing-Anpassung Folgendes umfasst:
Mittel zum Senden (405) eines Uplink-Timing-Anpassungsbefehls über einen HS-DPASCCH (High Speed Downlink Packet Access Shared Control Channel).

11. NodeB nach einem der Ansprüche 8-9, worin das Mittel zum Initiieren (403) der Uplink-Timing-Anpassung Folgendes umfasst:
Mittel zum Senden (405) eines Uplink-Timing-Anpassungsbefehls über einen E-UAGCH (Enhanced Uplink Absolute Grant Channel).

12. Benutzergerät (420) eines WCDMA-Kommunikationssystems, wobei das System eine Funknetzsteuerung, RNC, umfasst, die an einen NodeB angeschlossen ist, worin das Benutzergerät dazu angepasst ist, Signale an den NodeB mit einem bestimmten Timing zu senden, **gekennzeichnet durch**,
Mittel, um einen Uplink-Timing-Anpassungsbefehl über einen Kanal nur dann zu empfangen (421), wenn eine berechnete Differenz zwischen einer geschätzten Empfangszeit des Benutzergerätsignals und einer Zeitreferenz einen vordefinierten Schwellenwert übersteigt, und
Mittel zum Anpassen (422) des Uplink-Timings gemäß dem Befehl.

13. Benutzergerät nach Anspruch 12, worin der Kanal ein HS-DPASCCH (High Speed Downlink Packet Access Shared Control Channel) ist.

14. Benutzergerät nach Anspruch 12, worin der Kanal ein E-UAGCH (Enhanced Uplink Absolute Grant Channel) ist.

## Revendications

1. Procédé d'ajustement de synchronisation de liaison montante d'un équipement d'utilisateur dans un système de communication AMRC à large bande, ledit système comprenant un contrôleur de réseau de radiocommunication, RNC, connecté à un noeud B, ledit noeud B recevant des signaux provenant de l'équipement d'utilisateur, ledit procédé étant **caractérisé par** les étapes suivantes exécutées par un noeud B et consistant à :
calculer (510) une différence entre un temps de réception estimé du signal de l'équipement de l'utilisateur et une référence de temps,
déterminer (515) si ladite différence excède une valeur seuil prédéfinie,
initier (520) l'ajustement de synchronisation de liaison montante uniquement lorsque ladite différence excède la valeur seuil prédéfinie.

2. Procédé selon la revendication 1, dans lequel l'étape consistant à initier (520) l'ajustement de synchronisation de liaison montante comprend l'étape supplémentaire consistant à :
envoyer (530) une requête de contrôle de synchronisation de liaison descendante au RNC, qui est basée sur une différence calculée entre un temps de réception estimé d'un signal d'équipement d'utilisateur et une référence de temps, de manière à ce que le RNC ajuste la synchronisation de liaison descendante.

3. Procédé selon l'une quelconque des revendications 1 et 2, dans lequel l'étape consistant à initier (520) l'ajustement de synchronisation de liaison montante comprend l'étape supplémentaire consistant à :
envoyer (540) une commande d'ajustement de synchronisation de liaison montante sur un canal de contrôle partagé d'accès par paquets en liaison descendante haut débit.

4. Procédé selon l'une quelconque des revendications 1 et 2, dans lequel l'étape consistant à initier (520) l'ajustement de synchronisation de liaison montante comprend l'étape supplémentaire consistant à :
envoyer (540) une commande d'ajustement de synchronisation de liaison montante sur un canal d'allocation absolue de liaison montante améliorée (E-AGCH).

5. Procédé d'ajustement de synchronisation de liaison montante d'un équipement d'utilisateur dans un système de communication AMRC à large bande, ledit système comprenant un contrôleur de réseau de radiocommunication, RNC, connecté à un noeud B, l'équipement d'utilisateur envoyant des signaux au noeud B avec une certaine synchronisation de liaison montante, ledit procédé étant **caractérisé par** les étapes suivantes exécutées par l'équipement d'utilisateur et consistant à :
recevoir (570) une commande d'ajustement de synchronisation de liaison montante sur un canal, uniquement lorsqu'une différence calculée entre un temps de réception estimé du signal de l'équipement d'utilisateur et une référence de temps excède une valeur seuil prédéfinie, et
ajuster (580) la synchronisation de liaison montante en fonction de la commande.

6. Procédé selon la revendication 5, dans lequel le canal est un canal de contrôle 5 partagé d'accès par paquets en liaison descendante haut débit.

7. Procédé selon la revendication 5, dans lequel le canal est un canal d'allocation absolue de liaison montante améliorée (E-AGCH).

8. Noeud B (400) d'un système de communication AMRC à large bande, ledit noeud B étant connectable à un contrôleur de réseau de radiocommunication, RNC, et adapté pour recevoir des signaux d'un équipement d'utilisateur, **caractérisé par** :
un moyen pour calculer (401) une différence entre un temps de réception estimé d'un signal d'équipement d'utilisateur et une référence de temps,
un moyen pour déterminer (402) si ladite différence excède une valeur seuil prédéfinie, et
5 un moyen pour initier (403) un ajustement de synchronisation de liaison montante uniquement lorsque ladite différence excède la valeur seuil prédéfinie.

9. Noeud B selon la revendication 8, dans lequel le moyen pour initier (403) l'ajustement de synchronisation de liaison montante comprend :
un moyen pour envoyer (404) une requête de contrôle de synchronisation de liaison descendante au RNC, qui est basée sur une différence calculée entre un temps de réception estimé d'un signal d'équipement d'utilisateur et une référence de temps, de manière à ce que le RNC ajuste la synchronisation de liaison descendante.

10. Noeud B selon l'une quelconque des revendications 8 et 9, dans lequel le moyen pour initier (403) l'ajustement de synchronisation de liaison montante comprend :
un moyen pour envoyer (405) une commande d'ajustement de synchronisation de liaison montante sur un canal de contrôle partagé d'accès par paquets en liaison descendante haut débit.

11. Noeud B selon l'une quelconque des revendications 8 et 9, dans lequel le moyen pour initier (403) l'ajustement de synchronisation de liaison montante comprend :
un moyen pour envoyer (405) une commande d'ajustement de synchronisation de liaison montante sur un canal d'allocation absolue de liaison montante améliorée (E-AGCH).

12. Équipement d'utilisateur (420) d'un système de communication AMRC à large bande, ledit système comprenant un contrôleur de réseau de radiocommunication, RNC, 5 connecté à un noeud B, dans lequel l'équipement d'utilisateur est adapté pour envoyer des signaux au noeud B avec une certaine synchronisation, **caractérisé par**
un moyen pour recevoir (421) une commande d'ajustement de synchronisation de liaison montante sur un canal, uniquement lorsqu'une différence calculée entre un temps de réception estimé du signal de l'équipement d'utilisateur et une référence de temps excède une valeur seuil prédéfinie, et
un moyen pour ajuster (422) la synchronisation de liaison montante en fonction de la commande.

13. Équipement d'utilisateur selon la revendication 12, dans lequel le canal est un canal de contrôle partagé d'accès par paquets en liaison descendante haut débit.

14. Équipement d'utilisateur selon la revendication 12, dans lequel le canal est un canal d'allocation absolue de liaison montante améliorée (E-AGCH).
